# FASCICULE DE BREVET EUROPEEN

(11) **EP 3 797 061 B1**
(45) Date de publication et mention de la délivrance du brevet: **07.09.2022**
(21) Numéro de dépôt: 19790581.3
(22) Date de dépôt: 17.04.2019
(51) Int. Cl.: B62D 25/06, B62D 27/02

(54) **CAISSE DE VEHICULE AUTOMOBILE EQUIPEE D'UN PAVILLON INTEGRANT UN ORGANE DE CORRECTION D'UN ECART DE PORTEE DU PAVILLON CONTRE DES TRAVERSES**
KRAFTFAHRZEUGKAROSSERIE MIT EINEM DACH MIT EINEM ELEMENT ZUM KORRIGIEREN EINER ABSTANDSDIFFERENZ ZWISCHEN DACH UND QUERTRÄGERN
MOTOR VEHICLE BODY EQUIPPED WITH A ROOF INCORPORATING A MEMBER FOR CORRECTING A DIFFERENCE OF SPAN OF THE ROOF AGAINST THE CROSS-MEMBERS

(30) Priorité: 23.05.2018 FR 1854287
(43) Date de publication de la demande: 31.03.2021
(73) Titulaire: PSA Automobiles SA, 78300 Poissy (FR)
(72) Inventeur: PETIT, Francois, 25260 MONTENOIS (FR); WALHO, Eddy, 78930 GUERVILLE (FR); SAVINA, Patrick, 92350 LE PLESSIS ROBINSON (FR)
(86) Numéro de dépôt international: PCT/FR2019/050910
(87) Numéro de publication internationale: WO 2019/224444

(56) Documents cités:
- DE-A1-102013 006 031
- FR-A1- 3 014 341
- JP-A- 2015 189 356
- US-A1- 2015 217 812

## Description

La présente invention relève des toits fixes ou mobiles équipant les caisses des véhicules automobiles. L'invention concerne plus spécifiquement les modalités de positionnement d'un pavillon équipant une caisse de véhicule automobile, contre une charpente ménagée par la caisse.

Les véhicules automobiles sont classiquement équipés d'un toit de couverture de l'habitacle, pouvant être fixe ou mobile. Le toit comprend typiquement un pavillon formé d'un ou de plusieurs panneaux globalement plans, qui s'étend suivant un plan global défini par une direction longitudinale et une direction transversale d'extension du véhicule. Le pavillon présente un galbe suivant son plan pour conférer une esthétique particulière au véhicule et/ou pour améliorer son aérodynamisme.

Le pavillon est fixé sur une charpente ménagée par des éléments de carrosserie que comprend la caisse du véhicule et qui sont assemblés entre eux. La charpente est essentiellement formée de longerons qui s'étendent entre l'avant et l'arrière du véhicule et qui sont entretoisés par des traverses qui s'étendent entre les côtés latéraux du véhicule. La charpente est supportée en élévation par des montants répartis longitudinalement aux côtés latéraux de la caisse.

Les traverses et les longerons sont fixés au sommet des montants via des éléments de carrosserie, tels que des goussets et/ou des doublures de custode par exemple. Des joints souples en résine ou en mousse sont communément interposés localement entre le pavillon et les éléments de carrosserie qui le supportent. De tels joints souples, déformables par suite de la fixation du pavillon sur la charpente, permettent de tenir compte des tolérances de fabrication et/ou d'assemblage entre eux du pavillon et/ou des composants de la charpente, pour conforter une prise d'appui correcte du pavillon sur la charpente.

Pour connaître un environnement technologique proche de la présente invention, on pourra par exemple se reporter aux documents US2015217812 (HONDA MOTOR CO Ltd) et JP2015189356 (DAIHATSU MOTOR Ltd) qui décrivent de telles modalités d'installation d'un pavillon sur une charpente ménagée par la caisse d'un véhicule automobile.

Le document US 2015/217812 A1 décrit une caisse de véhicule automobile selon le préambule de la revendication 1.

Dans ce contexte, il est fréquent qu'une même gamme de véhicules automobiles comprenne plusieurs modèles de véhicule qui s'étendent suivant des longueurs différenciées. Par suite, les architectures respectives des caisses des différents modèles de véhicule sont adaptées selon la spécificité de leur longueur. De telles adaptations concernent notamment l'extension longitudinale et/ou le galbe du pavillon, et en corollaire les configurations des éléments de carrosserie constitutifs de la charpente sur lesquels porte le pavillon.

En effet le volume et/ou la densité, ainsi que la résistance intrinsèque à la rupture des dits joints souples interposés entre le pavillon et la charpente, sont structurellement limités au regard de leur aptitude à se déformer pour compenser de manière pérenne et adaptée des écarts de portée entre le pavillon et la charpente. Ceci entraîne dès lors selon les modèles de véhicule d'une même gamme de véhicules de longueurs différenciées, non seulement une adaptation de la configuration du pavillon, notamment en ce qui concerne son extension longitudinale et/ou son galbe, mais aussi une mise en adéquation de la configuration et des modalités d'assemblage entre eux des éléments de carrosserie constitutifs de la charpente, de manière à ce que le pavillon porte de manière correcte sur la charpente.

Dans ce contexte, l'invention a pour objet une caisse de véhicule automobile pourvue d'un toit fixe ou mobile comprenant un pavillon portant sur une charpente ménagée par des éléments de carrosserie assemblés entre eux. Pour rappel, la charpente comprend au moins des longerons latéraux entretoisés par des traverses qui sont fixés sur des montants.

Un but de l'invention est de limiter les conséquences sur l'organisation structurelle de la caisse liées à une variation d'architecture de la caisse selon des modèles de véhicules de longueurs différenciées d'une même gamme de véhicules.

Un autre but de l'invention est de mutualiser au mieux les architectures respectives des caisses différenciées propres à chacun des dits modèles de véhicule, et cela malgré notamment leur éventuelle variation de longueur.

Un autre but de l'invention est de certifier une prise d'appui adaptée du pavillon sur la charpente malgré une variation de son extension longitudinale et/ou de son galbe, selon les architectures respectives des caisses différenciées propres à chacun des dits modèles de véhicule.

Un autre but de l'invention est de certifier ladite prise d'appui en évitant de modifier le volume et/ou la densité de joints souples interposés entre le pavillon et la charpente pour compenser d'éventuelles tolérances de fabrication et/ou d'assemblage entre eux du pavillon et/ou des composants de la charpente, pour garantir leur intégrité structurelle et/ou leur efficacité de manière pérenne.

Un autre but de l'invention est de limiter la diversification de l'outillage nécessaire à la fabrication de chacune des caisses de différents dits modèles de véhicule, tant en ce qui concerne l'obtention que l'assemblage entre eux des éléments de carrosserie composant les différentes caisses propres à chacun des dits modèles.

Il est notamment visé par l'invention de réduire les coûts induits par les variations d'architecture des caisses propres à divers modèles de véhicule d'une même gamme de véhicule, dans le contexte d'une concurrence économique notoirement sévère dans le domaine automobile impliquant une recherche constante de limitation des coûts d'obtention des véhicules.

Les buts visés par la présente invention sont atteints isolément ou en combinaison par application des dispositions qui suivent. Ces buts sont obtenus selon l'invention à l'aide d'une caisse de véhicule automobile selon la revendication 1.

Il est dès à présent précisé certaines notions relatives et/ou termes qui sont communément admis dans le domaine automobile pour décrire un véhicule automobile, ainsi que la caisse qu'il comprend et/ou ses composants. Les directions d'extension d'un véhicule sont communément définies dans un repère orthonormé identifié suivant une direction longitudinale, une direction transversale et une direction verticale.

Dans le contexte de l'invention, de telles directions et les notions relatives afférentes sont appliquées à la caisse et/ou à ses composants, notamment en ce qui concerne ledit pavillon et/ou les éléments de carrosserie composant au moins ladite charpente.

La notion longitudinal est typiquement considérée entre l'avant et l'arrière du véhicule par rapport à la station du conducteur qui fait face à la direction d'avancement vers l'avant du véhicule. Par suite, les notions avant et arrière sont des notions relatives considérées suivant la direction longitudinale. Le terme longeron désigne classiquement un élément de carrosserie s'étendant principalement suivant la direction longitudinale.

La notion vertical est typiquement considérée suivant une direction en élévation du véhicule perpendiculairement au plan de roulage de la caisse au sol. Par suite, les notions inférieur et supérieur, ou autres notions apparentées comme par exemple base et sommet, sous et/ou dessous et sur et/ou dessus, ou encore surplomb et contrebas, sont des notions relatives considérées au regard de la notion de verticalité par rapport au plan de roulage au sol de la caisse. Le terme montant désigne classiquement un élément de carrosserie s'étendant principalement suivant la direction verticale.

La notion transversal est typiquement considérée suivant une direction d'extension du véhicule entre ses côtés latéraux droit et gauche considérés par rapport à la station du conducteur en position de conduite du véhicule. Le terme traverse désigne classiquement un élément de carrosserie s'étendant principalement suivant la direction transversale.

De telles notions et/ou termes communément admis, utilisés et compris dans le domaine automobile, sont utilisés pour définir l'invention en étant compris en tant que tels par l'homme du métier sans avoir nécessairement à les préciser à nouveau, notamment pour rendre les revendications concises tout en étant clairement comprises de par l'évidence de la signification de tels notions et/ou termes qui viennent en cas de besoin d'être précisés.

La caisse de véhicule automobile relevant de l'invention est équipée d'un pavillon galbé portant sur une charpente ménagée par la caisse suivant une direction verticale d'extension de la caisse. Le pavillon s'étend suivant un plan global défini par une direction longitudinale d'extension de la caisse entre l'avant et l'arrière et une direction transversale d'extension de la caisse entre ses côtés latéraux.

La charpente est composée d'éléments de carrosserie assemblés entre eux dont au moins des longerons latéraux entretoisés par des traverses qui sont réparties le long de la caisse et qui comprennent une traverse avant, une traverse arrière et au moins une traverse médiane longitudinalement interposée entre la traverse avant et la traverse arrière.

Tel que classiquement, la charpente est fixée au sommet de montants qui sont répartis longitudinalement sur la caisse le long de chacun de ses côtés latéraux. Chacune des traverses et les longerons sont conjointement assemblés aux montants via des organes d'assemblage qui sont couramment formés, à titre indicatif non restrictif, de goussets et/ou de doublures de custode.

Selon l'invention, la caisse est reconnaissable en ce que le pavillon intègre au moins une cale rigide via laquelle le pavillon porte contre la charpente. Ladite au moins une cale forme un organe de correction d'un écart de portée du pavillon contre la charpente entre une portée du pavillon contre la traverse avant et une portée du pavillon contre la charpente à l'arrière de la traverse avant.

Autrement dit, au moins une cale rigide intégrée au pavillon porte à l'arrière de la traverse avant contre au moins un élément de carrosserie constitutif de la charpente. La cale rigide ménage un organe d'appui robuste du pavillon sur la charpente en étant indéformable sous l'effet de la fixation du pavillon sur la charpente. La cale rigide constitue un dit organe de correction rectifiant des distances de séparation différentes entre une face inférieure du pavillon orientée suivant son plan d'extension vers la charpente, et d'une part une zone avant du pavillon portant contre la traverse avant et d'autre part au moins une zone arrière et/ou une zone médiane du pavillon portant contre la charpente à l'arrière de ladite zone avant du pavillon et donc de la traverse avant.

La rigidité de la cale est appréciée au regard de son indéformabilité par suite de la fixation du pavillon sur la charpente, ou autrement dit à contrario d'une souplesse qui autoriserait sa déformation par suite de la fixation du pavillon sur la charpente. Ladite au moins une cale est notamment issue d'un matériau réputé dur tel que par exemple le métal ou un matériau plastique thermodurcissable. Il est ainsi compris que ladite au moins une cale est strictement distincte d'un quelconque organe souple présentant une souplesse autorisant sa déformation par suite d'une fixation du pavillon sur la charpente.

Il est aussi compris que la portée du pavillon contre l'un au moins des éléments de carrosserie constitutifs de la charpente est susceptible d'être une portée directe ou une portée indirecte, tel que notamment via au moins un organe d'assemblage entre eux des éléments de carrosserie constitutifs de la charpente comme par exemple un gousset et/ou une doublure de custode.

L'intégration au pavillon de ladite au moins une cale permet de conserver une architecture de la caisse en partie identique pour plusieurs modèles de véhicule d'une même gamme de véhicule, depuis sa zone avant vers sa zone arrière jusqu'à au moins une dite traverse médiane et cela sans affecter une portée adaptée du pavillon contre la charpente.

Autrement dit, ladite au moins une cale permet de placer le pavillon en appui contre la charpente malgré une variation de longueur et/ou du galbe du pavillon selon des modèles de véhicules de longueurs différenciées d'une même gamme de véhicules, et cela en conservant une architecture de caisse commune auxdits modèles de véhicules de longueurs différenciées depuis l'avant de la caisse jusqu'à au moins une traverse médiane sur laquelle porte le pavillon.

Selon l'invention ladite au moins une cale est issue de la matière du pavillon en étant formée d'une empreinte ménagée par emboutissage du pavillon.

Autrement dit, ladite cale est intégrée au pavillon en étant avantageusement formée à moindres coûts par emboutissage du pavillon. Une telle opération d'emboutissage ménage dans la paroi formant le pavillon au moins un relief d'extension verticale constitutif de ladite au moins une cale.

Selon une forme de réalisation, ladite au moins une cale est calibrée conformément au maintien d'un jeu vertical entre des surfaces de portée du pavillon et de la charpente l'un contre l'autre, qui est inférieur à quatre millimètres.

Autrement dit, la calibration de ladite au moins une cale est déterminée pour maintenir une distance verticale de séparation, ou en d'autres termes ledit jeu vertical, qui est sensiblement constante entre les surfaces de portée du pavillon et de la charpente l'un contre l'autre.

Ledit jeu vertical est maintenu inférieur à quatre millimètres. A titre indicatif non restrictif, ledit jeu vertical entre le pavillon et la charpente varie entre deux millimètres et quatre millimètres pour permettre d'interposer entre le pavillon et la charpente au moins un organe souple déformable par suite de la fixation du pavillon sur la charpente pour compenser des écarts de tolérances de fabrication et/ou d'assemblage entre eux du pavillon et/ou des composants de la charpente

Ainsi selon une forme de réalisation, ledit jeu vertical est comblé par des organes souples interposés entre lesdites surfaces de portée du pavillon et de la charpente l'un contre l'autre. Lesdits organes souples sont déformables sous l'effet de la fixation du pavillon sur la charpente. Lesdits organes souples sont par exemple formés de joints en résine et/ou de tampons en matériau alvéolaire, tel qu'issus d'une mousse synthétique.

Selon une forme de réalisation, une zone avant du pavillon via laquelle le pavillon porte contre la traverse avant, est exempte de cale. Ainsi, la portée du pavillon sur la traverse avant forme un référentiel déterminant l'extension de la dite au moins un cale via laquelle le pavillon porte sur la charpente à l'arrière de sa zone avant de portée contre la traverse avant.

Selon une forme de réalisation, deux dites cales qualifiées arrière portent contre la traverse arrière à ses extrémités respectives. De préférence, lesdites cales arrière portent respectivement sur les extrémités de la traverse arrière via des organes d'assemblage entre les extrémités de la traverse arrière et respectivement les extrémités arrière latérales des longerons. De tels organes d'assemblage sont par exemple des goussets et/ou des doublures de custode.

Selon une forme de réalisation, chacune desdites cales arrière est formée d'une première dite empreinte ménagée en surplomb d'une première face inférieure du pavillon qui s'étend elle-même indifféremment en surplomb ou en contrebas de la traverse arrière et qui est orientée vers l'intérieur de la caisse.

Selon une forme de réalisation, au moins une dite cale qualifiée médiane porte contre au moins une première dite traverse médiane.

Selon une forme de réalisation, ladite au moins une cale médiane est formée d'une deuxième dite empreinte s'étendant transversalement au pavillon en étant ménagée en contrebas d'une deuxième face inférieure du pavillon qui s'étend elle-même en surplomb de la première traverse médiane et qui est orientée vers l'intérieur de la caisse.

De préférence, ladite deuxième empreinte ménage deux dites cales médianes parallèles et longitudinalement distantes l'une de l'autre, en étant formées de creux s'étendant en contrebas de ladite deuxième face inférieure du pavillon. Les cales médianes formées par la deuxième empreinte bordent une zone du pavillon préservée de déformation lors de l'opération d'emboutissage du pavillon ménageant. La deuxième empreinte ménage de préférence une ceinture entourant ladite zone du pavillon préservée de déformation pour conforter la robustesse de la zone du pavillon portant contre la première traverse médiane.

Selon une forme de réalisation, une zone médiane avant du pavillon via laquelle le pavillon porte contre une deuxième traverse médiane longitudinalement interposée entre la traverse avant et une dite première traverse médiane, est exempt de cale.

Il en ressort qu'une architecture de la caisse commune à des modèles de véhicules de longueurs différenciées d'une même gamme de véhicules peut être conservée depuis l'avant de la caisse jusqu'à la première traverse médiane.

Il est par exemple considéré le cas où la charpente d'une caisse relevant de l'invention comprend quatre traverses, dont successivement depuis l'arrière vers l'avant une traverse arrière, une dite première traverse médiane, une dite deuxième traverse médiane et une traverse avant.

Dans ce cas, une majeure partie de la caisse peut être commune à plusieurs modèles de véhicules d'une même gamme de véhicule, notamment dans sa partie s'étendant depuis l'avant jusqu'à la première traverse médiane, et cela sans affecter une portée correcte du pavillon sur la charpente qui peut, pour au moins un dit modèle de véhicule de la gamme de véhicules, intégrer au moins une cale conformément à l'invention.

Par exemple un modèle de véhicule court présente une extension longitudinale plus courte que celle d'un modèle de véhicule long d'une même gamme de véhicules. L'architecture des caisses respectivement du modèle de véhicule court et du modèle de véhicule long sont identiques depuis l'avant vers l'arrière des caisses, jusqu'à au moins la première traverse médiane.

Pour une caisse du modèle de véhicule court, un pavillon court dont elle est équipée présente une dimension et un galbe adaptés audit modèle de véhicule court. Dans ce cas, ledit pavillon court est exempt de dites cales. Pour une caisse du modèle de véhicule long relevant de l'invention, un pavillon long dont elle est équipée intègre une dite au moins une cale.

Selon une forme de réalisation d'une telle caisse d'un modèle de véhicule long, au moins une cale médiane porte contre la première traverse médiane et au moins une cale arrière porte contre la traverse arrière de la caisse.

De préférence, deux dites cales médianes transversalement étendues et longitudinalement distantes l'une de l'autre, portent contre la première traverse médiane.

De préférence encore deux dites cales arrière portent contre la traverse arrière respectivement à l'une et l'autre de ses extrémités et/ou contre les longerons à leurs extrémités arrière latérales respectives, préférentiellement via des organes d'assemblage entre eux de la traverse arrière et des longerons.

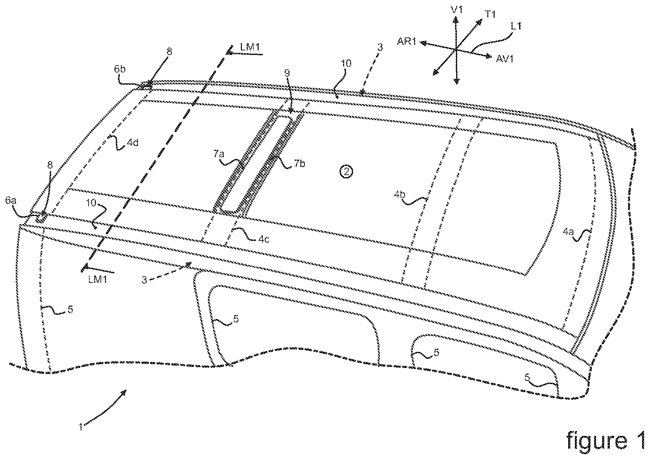

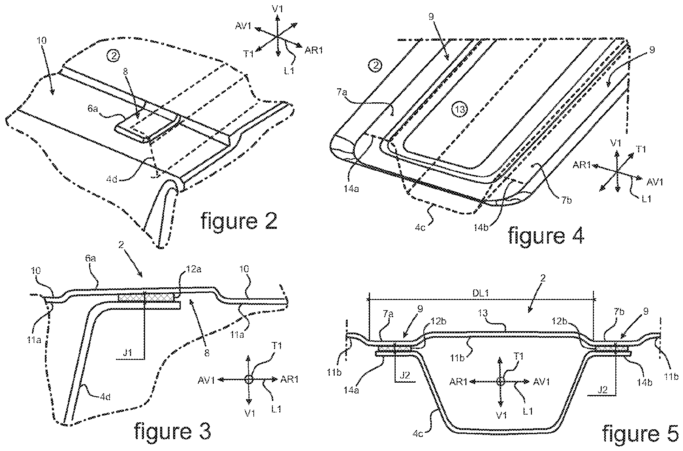

Un exemple de réalisation de la présente invention va être décrit en relation avec les figures des planches annexées, dans lesquelles :
-) la figure 1 est une illustration partielle en perspective de dessus d'un exemple de réalisation d'une caisse de véhicule automobile conforme à l'invention.
-) les figures 2 et 3 sont des illustrations partielles de l'extrémité arrière de la caisse représentée sur la figure 1, respectivement en perspective de dessus et en coupe longitudinale.
-) les figures 4 et 5 sont des illustrations partielles d'une zone médiane de la caisse représentée sur la figure 1, respectivement en perspective de dessus et en coupe longitudinale.

Les figures et leurs descriptions détaillées exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite.

Sur la figure 1, une caisse 1 de véhicule automobile s'étend longitudinalement L1 d'avant AV1 en arrière AR1, transversalement T1 entre ses côtés droit et gauche et verticalement V1 en élévation depuis son plan de roulage au sol. La caisse 1 comprend un pavillon 2 galbé installé sur une charpente 3, 4a-4d pour ménager un toit de couverture de l'habitacle du véhicule.

Tel que classiquement, le pavillon 2 s'étend essentiellement suivant un plan défini par les directions longitudinale L1 et transversale T1 d'extension de la caisse 1. La charpente 3, 4a-4d comprend des longerons 3 latéraux entretoisés par des traverses 4a-4d, qui sont fixés à des montants 5 répartis longitudinalement le long des côtés latéraux de la caisse 1. Le pavillon 2 est fixé sur la charpente 3, 4a-4d en portant au moins contre les longerons 3 et les traverses 4a-4d.

Les traverses 4a-4d sont réparties le long L1 de la caisse 1 et comprennent depuis l'arrière vers l'avant de la caisse 1 une traverse arrière 4d, plusieurs traverses médianes 4c, 4b, et une traverse avant 4a. Classiquement, une zone arrière du pavillon 2 porte contre la traverse arrière 4d et une zone avant du pavillon 2 porte contre la traverse avant 4a.

Selon l'exemple illustré et suivant l'extension longitudinale L1 de la caisse 1, une première traverse médiane 4c est interposée entre la traverse arrière 4d et une deuxième traverse médiane 4b, la deuxième traverse médiane 4b étant interposée entre la première traverse médiane 4c et la traverse avant 4a. Une zone médiane arrière du pavillon 2 porte contre la première traverse médiane 4c et une zone médiane avant du pavillon 2 porte contre la deuxième traverse médiane 4b.

Il est courant qu'une même gamme de véhicules comprenne plusieurs modèles de véhicules, dont les extensions en longueurs sont différentiées d'un modèle de véhicule à un autre modèle de véhicule. La caisse 1 illustrée pour exemple est une caisse 1 d'un modèle de véhicule long. Il est indiqué à titre illustratif une limite LM1 de longueur L1 vers l'arrière de la caisse 1 d'un modèle de véhicule court de la même gamme de véhicules.

L'extension en longueur L1 et/ou le galbe du pavillon 2 varie en conséquence entre un pavillon 2 court équipant la caisse 1 d'un modèle de véhicule court et un pavillon 2 long équipant la caisse 1 illustrée d'un modèle de véhicule long. Dans ce contexte, il est habituel d'adapter l'architecture de la caisse 1, notamment en ce qui concerne la charpente 3, 4a-4d, selon la longueur du modèle de véhicule en tenant compte de la longueur et/ou du galbe du pavillon 2. Une telle adaptation de l'architecture de la caisse 1 concerne notamment au moins une adaptation de la configuration des traverses 4a-4d et/ou d'un arc de conformation des longerons 3, voire aussi de leurs modalités d'assemblage entre eux, pour procurer une portée adaptée du pavillon 2 sur la charpente 3, 4a-4d.

L'architecture de la caisse 1 est ainsi adaptée de sorte que le pavillon 2 portent contre les éléments de carrosserie constitutifs de la charpente quel que soit le modèle de véhicule court ou long en fonction de la longueur et/ou du galbe de leurs pavillons 2 respectifs. Cependant, de telles modalités d'adaptation de la caisse 1 sont coûteuses et il est opportun de trouver une solution pour limiter l'impact de telles adaptations sur le coût du véhicule.

A cet effet, l'invention propose d'intégrer au pavillon 2 d'un modèle de véhicule long des cales 6a, 6b et 7a, 7b via lesquelles le pavillon 2 porte contre la charpente 3, 4a-4d. Les cales 6a, 6b et 7a,7b constituent des organes de correction d'un écart de portée du pavillon 2 contre la charpente 3, 4a-4d entre une portée du pavillon 2 contre la traverse avant 4a et une portée du pavillon 2 contre une ou plusieurs traverses médianes 4b, 4c et contre la traverse arrière 4d.

Lesdits organes de correction formés par les cales 6a, 6b et 7a, 7b sont agencés pour rattraper localement, isolément ou en combinaison, des jeux verticaux J1, J2 de portée du pavillon 2 contre la charpente 3, 4a-4d, en fonction du galbe et/ou de la longueur d'un pavillon 2 spécifique à un modèle de véhicule.

Autrement dit par suite d'une modification notamment du galbe et/ou de la longueur du pavillon 2, le pavillon 2 peut intégrer au moins une dite cale 6a, 6b et 7a, 7b à l'une quelconque au moins de sa zone arrière de portée contre la traverse arrière 4d et/ou de ses zones médianes de portée contre l'une au moins des traverses médianes 4c, 4b.

Selon l'exemple illustré, de telles cales 6a, 6b et 7a, 7b sont intégrées au pavillon 2 à sa zone arrière de portée contre la traverse arrière 4d et à sa zone médiane arrière de portée contre la première traverse médiane 4c. Le pavillon 2 est exempt de cales à sa zone médiane avant de portée contre la deuxième traverse médiane 4b et à sa zone avant de portée contre la traverse avant 4a.

Les cales 6a, 6b et 7a, 7b sont intégrées au pavillon 2 en étant issues de sa matière constitutive, par suite de leur formation lors d'une opération d'emboutissage du pavillon 2 en une ou plusieurs étapes. Une telle opération d'emboutissage forme dans le pavillon 2 des empreintes 8, 9 qui ménagent les cales 6a, 6b et 7a, 7b, dont des premières empreintes 8 ménageant des cales arrière 6a, 6b portant contre la traverse arrière 4d et dont une deuxième empreinte 9 ménageant des cales médianes 7a, 7b portant contre la première traverse médiane 4c.

En se reportant aussi aux figures 2 et 3, le pavillon 2 comporte le long de ses bords latéraux des feuillures 10 s'étendant respectivement en surplomb des longerons 3. Les cales arrière 6a, 6b sont intégrées au pavillon 2 dans sa zone arrière latérale et portent contre les extrémités respectives de la traverse arrière 4d, notamment via des organes d'assemblage entre les extrémités de la traverse arrière 4d et les extrémités arrière respectives des longerons 3.

Plus particulièrement sur la figure 3, des premières empreintes 8 sont ménagées en surplomb d'une première face inférieure 11a du pavillon 2 qui s'étend elle-même en léger surplomb de la traverse arrière 4d. Les premières empreintes 8 ménagent des cales arrière 6a, 6b aux extrémités arrière latérales respectives du pavillon 2.

Au moins les cales arrière 6a, 6b forment un organe de correction d'un écart entre ladite première face inférieure 11a du pavillon 2 et la traverse arrière 4d, ou selon la dite variante entre ladite première face inférieure du pavillon 2 et les dits organe d'assemblage entre la traverse arrière 4d et les longerons 3.

Un tel organe de correction formé par les cales arrière 6a, 6b rectifie l'extension verticale V1 du dit écart en le limitant entre deux et quatre millimètres, pour permettre une application adaptée du pavillon contre la traverse arrière 4d, via notamment des premiers organes souples 12a.

La correction du dit écart permet de ménager un premier jeu J1 vertical entre la cale arrière 4d et la traverse arrière 4d. Le premier jeu J1 vertical est inférieur à quatre millimètres et ménage un espace de réception d'un dit premier organe souple 12a déformable sous l'effet de la fixation du pavillon 2 sur la charpente 3, 4a-4d, pour compenser d'éventuels écarts de fabrication et/ou d'assemblage entre le pavillon 2 et/ou des éléments de carrosserie constitutifs au moins de la charpente 3, 4a-4d.

Selon l'exemple de réalisation illustré, ledit premier jeu vertical J1 varie transversalement entre 2 mm et 3 mm pour rectifier ledit écart en prenant aussi en compte un galbe transversal T1 du pavillon 2.

En se reportant aussi aux figures 4 et 5, des cales médianes 7a, 7b sont intégrées au pavillon 2 dans sa zone médiane arrière de portée contre la première traverse médiane 4c. Les cales médianes 7a, 7b s'étendent parallèlement l'une par rapport à l'autre et parallèlement à la première traverse médiane 4c. Une dite deuxième empreinte 9 est ménagée en contrebas d'une deuxième face inférieure 11b du pavillon 2 qui s'étend elle-même en surplomb de la première traverse médiane 4c. La deuxième empreinte 9 ménage deux cales médianes 7a, 7b qui rectifient dans la zone médiane arrière du pavillon 2 un écart entre ladite deuxième face inférieure 11b du pavillon 2 et la première traverse médiane 4c.

Sur la figure 5, la correction du dit écart permet de ménager un deuxième jeu J2 vertical V1 entre les cales médianes 7a, 7b et la première traverse médiane 4c. Le deuxième jeu J2 vertical V1 est inférieur à quatre millimètres et ménage un espace de réception d'un deuxième organe souple 12b déformable sous l'effet de la fixation du pavillon 2 sur la charpente 3, 4a-4d, pour compenser d'éventuels écarts de fabrication et/ou d'assemblage entre le pavillon 2 et/ou des éléments de carrosserie constitutifs de la charpente 3, 4a-4d.

Les cales médianes 7a, 7b sont ménagées à distance longitudinale DL1 l'une de l'autre en bordant une zone 13 du pavillon 2 préservée de déformation lors d'une opération d'emboutissage du pavillon 2 formant la deuxième empreinte 9. Les cales médianes 7a, 7b portent dans ce cas contre des ailes 14a, 14b respectives que comporte la première traverse médiane 4c.

Selon l'exemple de réalisation illustré, ledit deuxième jeu J2 vertical V1 varie longitudinalement L1 entre 3 mm et 3,5 mm, pour corriger ledit écart en prenant en compte le galbe longitudinal du pavillon dans sa zone médiane de portée contre la première traverse médiane 4c.

## Revendications

1. Caisse (1) de véhicule automobile équipée d'un pavillon (2) galbé portant sur une charpente (3, 4a-4d) ménagée par la caisse (1) suivant une direction verticale (V1) d'extension de la caisse (1), le pavillon (2) s'étendant suivant un plan global défini par une direction longitudinale (L1) d'extension de la caisse (1) entre l'avant (AV1) et l'arrière (AR1) et une direction transversale (T1) d'extension de la caisse (1) entre ses côtés latéraux, la charpente (3, 4a-4d) étant composée d'éléments de carrosserie assemblés entre eux dont au moins des longerons (3) latéraux entretoisés par des traverses (4a-4d) qui sont réparties le long de la caisse (1) et qui comprennent une traverse avant (4a), une traverse arrière (4d) et au moins une traverse médiane (4b, 4c) longitudinalement (L1) interposée entre la traverse avant (4a) et la traverse arrière (4d), le pavillon (2) intégrant au moins une cale (6a, 6b ; 7a, 7b) rigide via laquelle le pavillon (2) porte contre la charpente (3, 4a-4d), ladite au moins une cale (6a, 6b ; 7a, 7b) formant un organe de correction d'un écart de portée du pavillon (2) contre la charpente (3, 4a-4d) entre une portée du pavillon (2) contre la traverse avant (4a) et une portée du pavillon (2) contre la charpente (3, 4a-4d) à l'arrière de la traverse avant (4a), **caractérisée en ce que** ladite au moins une cale (6a, 6b ; 7a, 7b) est issue de la matière du pavillon (2) en étant formée d'une empreinte (8, 9) ménagée par emboutissage du pavillon (2).

2. Caisse (1) de véhicule automobile selon la revendication 1, **caractérisé en ce que** ladite au moins une cale (6a, 6b ; 7a, 7b) est calibrée conformément au maintien d'un jeu (J1, J2) vertical (V1) entre des surfaces de portée du pavillon (2) et de la charpente (3, 4a-4d) l'un contre l'autre, qui est inférieur à quatre millimètres.

3. Caisse (1) de véhicule automobile selon la revendication 2, **caractérisée en ce que** ledit jeu (J1, J2) vertical (V1) est comblé par des organes souples (12a, 12b) interposés entre lesdites surfaces de portée du pavillon (2) et de la charpente (3, 4a-4d) l'un contre l'autre, lesdits organes souples (12a, 12b) étant déformables sous l'effet de la fixation du pavillon (2) sur la charpente (3, 4a-4d).

4. Caisse (1) de véhicule automobile selon l'une quelconque des revendications 1 à 3, **caractérisée en ce qu'**une zone avant du pavillon (2) via laquelle le pavillon (2) porte contre la traverse avant (4a), est exempte de cale.

5. Caisse (1) de véhicule automobile selon l'une quelconque des revendications 1 à 4, **caractérisée en ce que** deux dites cales (6a, 6b) qualifiées arrière portent contre la traverse arrière (4d) à ses extrémités respectives.

6. Caisse (1) de véhicule selon l'une quelconque des revendications 1 à 4 et selon la revendication 5, **caractérisée en ce que** chacune des dites cales arrière (6a, 6b) est formée d'une première dite empreinte (8) ménagée en surplomb d'une première face inférieure (11a) du pavillon (2) qui s'étend elle-même indifféremment en surplomb ou en contrebas de la traverse arrière (4d) et qui est orientée vers l'intérieur de la caisse (1).

7. Caisse (1) de véhicule automobile selon l'une quelconque des revendications 1 à 6, **caractérisée en ce qu'**au moins une dite cale (7a, 7b) qualifiée médiane porte contre au moins une première dite traverse médiane (4c).

8. Caisse (1) de véhicule automobile selon l'une quelconque des revendications 1 à 6 et selon la revendication 7, **caractérisée en ce que** ladite au moins une cale médiane (7a, 7b) est formée d'une deuxième dite empreinte (9) s'étendant transversalement (T1) au pavillon (2) en étant ménagée en contrebas d'une deuxième face inférieure (11b) du pavillon (2) qui s'étend elle-même en surplomb de la première traverse médiane (4c) et qui est orientée vers l'intérieur de la caisse (1).

9. Caisse (1) de véhicule automobile selon l'une quelconque des revendications 7 et 8, **caractérisée en ce qu'**une zone médiane avant du pavillon (2) via laquelle le pavillon (2) porte contre une deuxième traverse médiane (4b) longitudinalement (L1) interposée entre la traverse avant (4a) et une dite première traverse médiane (4c), est exempt de cale.

## Patentansprüche

1. Kraftfahrzeugkarosserie (1) mit einem gebogenen Dach (2), das auf einem Gerüst (3, 4a-4d) aufliegt, das von der Karosserie (1) in einer vertikalen Erstreckungsrichtung (V1) der Karosserie (1) ausgebildet ist, wobei sich das Dach (2) in einer Gesamtebene erstreckt, die durch eine Längsrichtung (L1) der Erstreckung der Karosserie (1) zwischen der Vorderseite (AV1) und der Rückseite (AR1) und eine Querrichtung (T1) der Erstreckung der Karosserie (1) zwischen ihren Seitenwänden definiert ist, wobei das Gerüst (3, 4a-4d) aus Elementen besteht miteinander verbundenen Karosserieträgern, von denen mindestens seitliche Längsträger (3) durch Querträger (4a-4d), die entlang des Wagenkastens (1) verteilt sind und die einen vorderen Querträger (4a), einen hinteren Querträger (4d) und mindestens einen in Längsrichtung (L1) mittleren Querträger (4b, 4c) umfassen, der zwischen dem vorderen Querträger (4a) und dem hinteren Querträger (4d) angeordnet ist, wobei der Dachhimmel (2) mindestens einen Keil (6a, 6b; 7a, 7b) starr ist, über die das Dach (2) an dem Gerüst (3, 4a-4d) anliegt, wobei der mindestens eine Keil (6a, 6b; 7a, 7b), die ein Korrekturorgan für eine Abweichung der Reichweite des Dachs (2) gegen das Gerüst (3, 4a-4d) zwischen einer Reichweite des Dachs (2) gegen den vorderen Querträger (4a) und einer Reichweite des Dachs (2) gegen das Gerüst (3, 4a-4d) hinter dem vorderen Querträger (4a) bildet, **dadurch gekennzeichnet, dass** der mindestens eine Keil (6a, 6b; 7a, 7b) aus dem Material des Daches (2) durch eine durch Tiefziehen des Daches (2) gebildete Vertiefung (8, 9) gebildet ist.

2. Kraftfahrzeugkarosserie (1) nach Anspruch 1, **dadurch gekennzeichnet, dass** der mindestens eine Keil (6a, 6b; 7a, 7b) entsprechend der Aufrechterhaltung eines vertikalen Spiels (J1, J2) (V1) zwischen Auflageflächen des Daches (2) und des Gerüsts (3, 4a-4d) gegeneinander kalibriert ist, der kleiner als vier Millimeter ist.

3. Kraftfahrzeugkarosserie (1) nach Anspruch 2, **dadurch gekennzeichnet, dass** das vertikale Spiel (J1, J2) (V1) durch flexible Elemente (12a, 12b) ausgefüllt ist, die zwischen den Auflageflächen des Dachs (2) und des Gerüsts (3, 4a-4d) aneinander angeordnet sind, wobei die flexiblen Elemente (12a, 12b) durch die Befestigung des Dachs (2) am Gerüst (3, 4a-4d) verformbar sind.

4. Kraftfahrzeugkarosserie (1) nach einem der Ansprüche 1 bis 3, **dadurch gekennzeichnet, dass** ein vorderer Bereich des Dachs (2), über den der Dachhimmel (2) an der vorderen Traverse (4a) anliegt, keilfrei ist.

5. Kraftfahrzeugkarosserie (1) nach einem der Ansprüche 1 bis 4, **dadurch gekennzeichnet, dass** zwei hintere qualifizierte Keile (6a, 6b) an ihren jeweiligen Enden an der hinteren Traverse (4d) anliegen.

6. Fahrzeugkarosserie (1) nach einem der Ansprüche 1 bis 4 und nach Anspruch 5, **dadurch gekennzeichnet, dass** jeder der hinteren Keile (6a, 6b) aus einer ersten Vertiefung (8) gebildet ist, die überhängend an einer ersten Unterseite (11a) des Dachs (2) ausgebildet ist, die sich selbst gleichmäßig über oder unter dem hinteren Querträger (4d) erstreckt und zum Inneren der Karosserie (1) gerichtet ist.

7. Kraftfahrzeugkarosserie (1) nach einem der Ansprüche 1 bis 6, **dadurch gekennzeichnet, dass** mindestens ein als Mittelteil ausgebildeter Keil (7a, 7b) an mindestens einem ersten Mittelteil (4c) anliegt.

8. Kraftfahrzeugkarosserie (1) nach einem der Ansprüche 1 bis 6 und nach Anspruch 7, **dadurch gekennzeichnet, dass** der mindestens eine mittlere Keil (7a, 7b) aus einer zweiten Vertiefung (9) gebildet ist, die sich quer (T1) zum Dach (2) erstreckt, wobei sie unterhalb einer zweiten Unterseite (11b) des Dachs (2) ausgebildet ist, die sich selbst überhängend über dem ersten mittleren Querträger (4c) erstreckt und die zum Inneren der Karosserie (1) gerichtet ist.

9. Kraftfahrzeugkarosserie (1) nach einem der Ansprüche 7 und 8, **dadurch gekennzeichnet, dass** ein vorderer mittlerer Bereich des Dachs (2), über den der Dachhimmel (2) gegen einen zweiten mittleren Querträger (4b) in Längsrichtung (L1) anliegt, der zwischen dem vorderen Querträger (4a) und einem ersten mittleren Querträger (4c) angeordnet ist, keilfrei ist.

## Claims

1. Body (1) of a motor vehicle equipped with a curved roof (2) bearing on a framework (3, 4a-4d) formed by the body (1) in a vertical direction (V1) of extension of the body (1), the roof (2) extending along an overall plane defined by a longitudinal direction (L1) of extension of the body (1) between the front (AV1) and the rear (AR1) and a transverse direction (T1) of extension of the body (1) between its lateral sides, the framework (3, 4a-4d) being composed of body elements A series of interconnected longitudinal beams (3), at least lateral beams (3) being braced by crossmembers (4a-4d) which are distributed along the body (1) and which comprise a front crossmember (4a), a rear crossmember (4d) and at least one longitudinal center crossmember (4b, 4c) (L1) interposed between the front crossmember (4a) and the rear crossmember (4d), the roof (2) incorporating at least one wedge (6a, 6b); 7a, 7b), via which the roof (2) bears against the framework (3, 4a-4d), said at least one wedge (6a, 6b; 7a, 7b) forming a member for correcting a range deviation of the roof (2) against the framework (3, 4a-4d) between a surface of the roof (2) against the front cross-member (4a) and a surface of the roof (2) against the framework (3, 4a-4d) at the rear of the front cross-member (4a), **characterized in that** said at least one wedge (6a, 6b; 7a, 7b) is derived from the material of the roof (2) by being formed by an impression (8, 9) formed by stamping the roof (2).

2. Motor vehicle body (1) according to claim 1, **characterized in that** said at least one wedge (6a, 6b; 7a, 7b) is calibrated in accordance with maintaining a vertical clearance (J1, J2) (V1) between bearing surfaces of the roof (2) and the frame (3, 4a-4d) against each other, which is less than four millimeters.

3. Motor vehicle body (1) according to claim 2, **characterized in that** said vertical clearance (J1, J2) (V1) is filled by flexible members (12a, 12b) interposed between said bearing surfaces of the roof (2) and of the framework (3, 4a-4d) one against the other, said flexible members (12a, 12b) being deformable under the effect of the fixing of the roof (2) on the framework (3, 4a-4d).

4. Motor vehicle body (1) according to any one of claims 1 to 3, **characterized in that** a front region of the roof (2) via which the roof (2) bears against the front cross-member (4a) is free of wedge.

5. Motor vehicle body (1) according to any one of claims 1 to 4, **characterized in that** two said rear-qualified wedges (6a, 6b) bear against the rear cross-member (4d) at its respective ends.

6. Motor vehicle body (1) according to any one of claims 1 to 4 and according to claim 5, **characterized in that** each of said rear wedges (6a, 6b) is formed by a first said impression (8) arranged overhanging a first lower face (11a) of the roof (2) which itself extends either overhanging or below the rear cross-member (4d) and which is oriented towards the inside of the body (1).

7. Motor vehicle body (1) according to any one of claims 1 to 6, **characterized in that** at least one said median qualified wedge (7a, 7b) bears against at least one said median cross-member (4c).

8. Motor vehicle body (1) according to any one of claims 1 to 6 and according to claim 7, **characterized in that** said at least one median wedge (7a, 7b) is formed by a second said indentation (9) extending transversely (T1) to the roof (2), being arranged below a second lower face (11b) of the roof (2) which itself extends overhanging the first median cross-member (4c) and which is oriented towards the inside of the body (1).

9. Motor vehicle body (1) according to any one of claims 7 and 8, **characterized in that** a front median zone of the roof (2) via which the roof (2) bears against a second longitudinal median cross-member (4b) (L1) interposed between the front cross-member (4a) and a said first median cross-member (4c), is free of shim.
